# EUROPEAN PATENT SPECIFICATION

(11) **EP 2 893 436 B1**
(45) Date of publication and mention of the grant of the patent: **05.08.2020**
(21) Application number: 13759365.3
(22) Date of filing: 22.08.2013
(51) Int. Cl.: G06F 8/65

(54) **SYSTEMS AND METHODS FOR SECURITY PANEL CONTENT MANAGEMENT**
SYSTEME UND VERFAHREN ZUR INHALTSVERWALTUNG IN EINEM SICHERHEITSPANEL
SYSTÈMES ET PROCÉDÉS DE GESTION DE CONTENU DE PANNEAU DE SÉCURITÉ

(30) Priority: 10.09.2012 US 201261698917 P
(43) Date of publication of application: 15.07.2015
(73) Proprietor: UTC Fire & Security Americas Corporation, Inc., Bradenton, FL 34202 (US)
(72) Inventor: ANANTHAKRISHNAN, N., Hitech City Hyderabad AP 500 081 (IN); MANGAIAHGARI, Phani Pavan, Kumar, Hitech City Hyderabad AP 500 081 (IN); NECKARAJE, Sunil, Kumar, Hitech City Hyderabad AP 500 081 (IN)
(74) Representative: Schmitt-Nilson Schraud Waibel Wohlfrom Patentanwälte Partnerschaft mbB
(86) International application number: PCT/US2013/056135
(87) International publication number: WO 2014/039265

(56) References cited:
- EP-A1- 1 519 582
- EP-A1- 2 432 205
- US-A1- 2003 055 723
- US-A1- 2009 282 333

## Description

### Field

The systems and methods pertain to security panel content access and management.

### Description of the Prior Art

Security panels can be utilized to manage and monitor security systems in a wide variety of environments, including home and office locations. For example, security panels can be used to allow users to activate select security equipment, to alert users of failures in certain security equipment, to alert monitoring companies of security threats, etc.

Generally, security panels include a user interface to allow a local user to access the security panel. Some security panels can utilize a touchpad for user input, while more advanced versions can utilize an interactive touchscreen. Additionally, more advanced versions can provide features to users that do not involve the security system, such as displaying weather information, traffic reports, daily news, etc.

Similar to other computing devices, security panels may require periodic updates in software to fix security problems, add or remove security devices, update the user interface, allow for new functionality, etc. Traditionally, such updates required installation by an administrator of the security system, either at the site of the security panel or remotely through a server. However, personal service by an administrator could prove costly to a consumer and usually was not performed immediately upon request.

Patent application document US 2009/282333 discloses a client-server system and an client-server interaction method which provides a user interface in which language-related content is decoupled from a document structure or content to permit the document to accept variable language text. The language-related content is stored separately from the document structure and content. The document without the language-related content acts like a template that can be populated with any type of language-related content. The language-related content can be provided in a separate file together with associated identifiers, and can be loaded into a cache or document object model (DOM) for processing. An XML file may be used for the language file, and the document may be constructed using HTML code. Document components can be assigned event handlers that cause pop-up boxes to be loaded and displayed with language-related content upon an event trigger.

EP 2 432 205 A1 discloses a multi-access customer service system and a corresponding method. The system comprises an access module, a data parsing module, a customer service module, and a service module. The access module is configured to receive various kinds of request information from a terminal device and transmits the request information to the data parsing module. The data parsing module, in turn, is configured to parse and identify the request information and transmit the parsed request information to the customer service module, which generates corresponding service information and transmits it to a terminal device, which, as already mentioned above, can be a mobile phone, a fixed telephone, a computer, a palm computer, or the like.

US 2003/055723 A1 discloses a financial management system by means of which a customer may pay for goods or services, or from which the customer may obtain information on alternative vendors for goods intended to be bought by the customer. EP 1 519 582 A1 discloses an image data delivery system and a corresponding method for transmitting image data, whereby upon receiving a client's request, the request information is analyzed, and multiple viewpoint image data is generated and supplied to the client.

Therefore, there is a need for a security panel content access and management system that can allow an untrained user to perform updates to a security panel, without requiring local or remote installation by administrative personnel.

According to the present invention, a security panel having the features according to claim 1, a system for managing content information having the features according to claim 3, and a method for accessing content information having the features according to claim 6 are provided. Preferred embodiments of the invention are specified in the respective dependent claims.

### Summary

According to embodiments, a security panel content access and management system is disclosed. In certain embodiments, the system comprises a server configured to receive user requests, via security panels, for content information. The server is further configured to send content information to the security panels, and allow administrators to update the content information.

### Brief Description of the Drawings

The accompanying figures, where like reference numerals refer to identical or functionally similar elements throughout the separate views, together with the detailed description below, are incorporated in and form part of the specification, and serve to further illustrate embodiments of concepts that include the claimed embodiments, and explain various principles and advantages of those embodiments.
FIG. 1 is a diagram depicting an exemplary security panel content access and management environment, consistent with certain disclosed embodiments.
FIG. 2 is a diagram depicting an exemplary security panel, consistent with certain disclosed embodiments.
FIG. 3 is a diagram depicting an exemplary instance of a content store, consistent with certain disclosed embodiments.
FIG. 4 is a flow diagram depicting an exemplary sequence of security panel content access and management communications, consistent with certain disclosed embodiments.

### Description of the Embodiments

With reference now to the various drawing figures in which identical elements are numbered identically throughout, a description of the embodiments will now be provided.

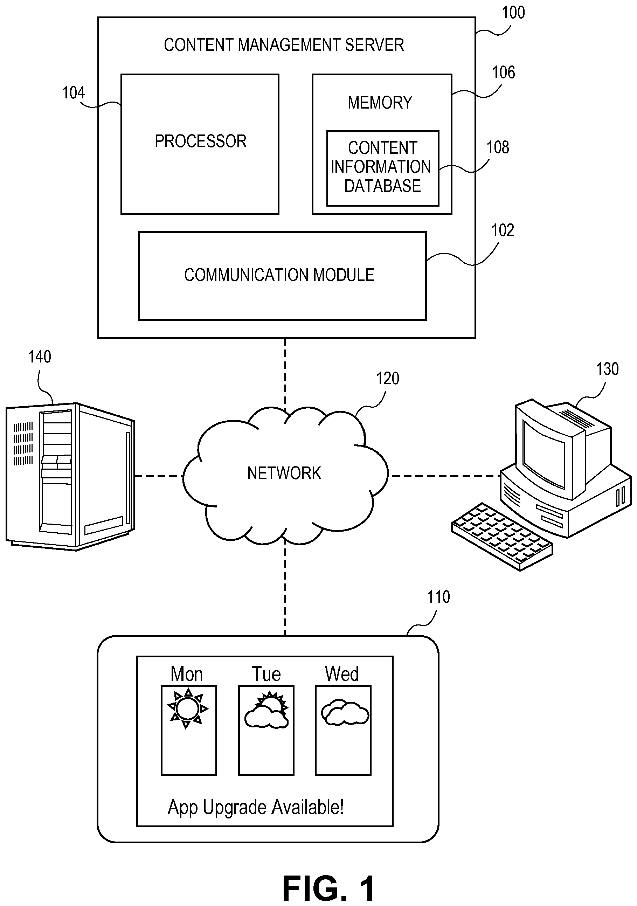

FIG. 1 is a diagram depicting an exemplary security panel content access and management environment, consistent with certain disclosed embodiments. The environment comprises content management server 100 connected to security panel 110 via network 120. In embodiments, content management server 100 can represent one or more computing devices, while, in further embodiments, content management server 100 can represent a service, such as a cloud service, an application, such as a website application, or a combination thereof. Network 120 can be, for example, a global or wide area network, such as the Internet. In some cases, network 120 can be a local area network. Server 100 can have communication module 102 implemented thereon. Server 100 can connect to network 120 via communication module 102.

Communication module 102 can include, in embodiments, a server-side network protocol application. For example, communication module 102 can include a server-side File Transfer Protocol (FTP) application. Content management server 100 can receive requests for content information files and transmit content information files to security panels via the server-side FTP application.

In some implementations, content management server 100 can allow a user local to the server, such as a system administrator, to edit the content information files. In further embodiments, an administrative user can remotely communicate with content management server 100 from administrative remote access device 130 via network 120. Although network 120 is depicted in FIG. 1 as representing a single network, such as the Internet, in some embodiments, network 120 can represent multiple communication networks. Additionally, administrative remote access device 130 can represent any type of computing device capable of communicating with server 100 via network 120, such as a desktop computer, laptop, cellular phone, or tablet computer.

In embodiments, security panel 110 can be configured to communicate with and receive content information from content management server 100. For example, security panel 110 can be configured to transmit requests for content information to content management server 100 and receive content information from content management server 100. It should be appreciated that while FIG. 1 depicts a single security panel 110, security panel 110 can represent a plurality of security panels that are individually connected to content management server 100 via network 120 or any other local or wide area network.

As shown in FIG. 1, content management server 100 can have memory 106 implemented thereon, such as electronic random access memory, or other forms of transitory or non-transitory computer readable storage mediums. Memory 106 can include content information database 108.

In some embodiments, content information database 108 can be utilized to store security panel content information. For example, content information database 108 can be utilized to store content information in machine-readable and/or human-readable files encoded in various mark-up languages including, but not limited to, Extensible Markup Language (XML), HyperText Markup Language (HTML), Scribe, Generalized Markup Language (GML), Standard Generalized Markup Language (SGML), and Extensible HyperText Markup Language (XHTML).

In embodiments, content information files can contain information related to current security panel updates, applications, application updates, etc. For example, a content information file can include the version number of an application, the internet protocol (IP) address and/or Domain Name System (DNS) name of a server hosting the application, the IP address of the server hosting an icon associated with the application, an indicator of the type of the application, a description of the application, an indicator of importance of the new version of the application, the price of the application, security panel compatibility requirements of the application, etc.

In embodiments, the content information file can be encoded in a markup language, such as XML. The content information file can utilize combination machine-readable and human-readable tags to designate the information in the content file. For example, information about a particular application can be contained within the tags <App> and </App>. Such tags will allow information about multiple applications to be included within the same XML file. Further, the name of the application can be included within the tags <Name> and </Name>. An example of an application name can appear in a file as <Name>Weather Application</Name>. A security panel would be able to parse such a thread and identify the name of the application as "Weather Application." Additional tags can include, but are not limited to, <Version>, <Location>, <Category>, <Icon>, <Description>, and <Price>. A content information file may also contain file declaration information, such as an XML declaration. An XML declaration can include the version of XML being used and the type of encoding used in the XML file.

Content information database 108 can include a plurality of content information files. In some embodiments, a content information file can be included for different types of security panels. Different applications and application updates may apply only to particular security panel types. For example, some security panel types may only include a simple display and may not be able to utilize applications tailored to touch screen displays. In other embodiments, a content information file can be included for each geographical zone to allow applications tailored to particular countries or updates in particular languages. In further embodiments, a content information file can be included for each type of content. For example, one content information file can contain information related to firmware updates for the security panels, while another content information file can contain information related to security equipment updates. The above examples are not intended to be limiting, and additional configurations of the content information files consistent with the disclosed embodiments can be utilized.

Content management server 100 can additionally comprise processor 104 communicating with memory 106. Processor 104 can further communication with communication module 102, which in turn communicates with a local or wide area network, such as network 120.

Processor 104 can execute control logic and perform data processing to perform the functions and techniques as discussed herein. For example, processor 104 can execute requests received from security panel 110, such as a request to transmit a content information data file.

After security panel 110 receives the content information file or files from content management server 100, security panel 110 can parse the file to identify information about the content. For example, the security panel 110 can identify the applications that are new or are not already installed on security panel 110, the applications that have newer versions than the version currently installed on security panel 110, the price of the applications, etc. Subsequently, security panel 110 can display the content information to the user via a content store.

In embodiments, remote file server 140 can additionally be connected to security panel 110 via network 120. Remote file server 140 can be utilized to store applications, updates, and/or application icons usable for the content store. Further, the IP address and/or DNS address of remote file server 140 can be listed as the location for various content and icons within the content information files, as described above.

In certain implementations, security panel 110 can request icons from remote file server 140 to populate the content store. Remote file server 140 can send the icons in response to the request, and security panel 110 can display the icons within the content store.

Additionally, security panel 110 can request content files from remote file server 140 based on, for example, a user selection of a new application within the content store. Remote file server 140 can transfer the requested file or files to security panel 110, based on the request. In embodiments, once the security panel receives the content files from remote file server 140, security panel 110 can install the content. In further embodiments, once security panel receives the content files from remote file server 140, security panel 110 can prompt the user to provide instructions on whether to install the content files. If the user selects to allow for installation of the content files, security panel 110 can install the content files.

In additional embodiments, remote file server 140 can be connected to or part of the same device as content management server 100. Accordingly, in some embodiments, security panel 110 can connect to remote file server 140 and download content information files and/or content files. Further, in other embodiments, remote file server 140 can represent a plurality of servers at different locations.

In embodiments, communications between security panel 110 and content management server 100 and communications between security panel 110 and remote file server 140 can utilize cryptographic protocols to prevent unauthorized access to the servers or to security panel 110. Such cryptographic protocols can include Secure FTP, Secure Shell (SSH), SSH FTP, FTP over SSH, Secure Sockets Layer (SSL), Point-to-Point Protocol (PPP), etc. For example, security panel 110 can tunnel an FTP session over an SSH connection to secure the communication.

It should be appreciated that the environment depicted in FIG. 1 is merely exemplary and can comprise various combinations and types of components. For example, although content management server 100 is pictured as a single device, content management server 100 can include a plurality of devices that are connected locally and/or are connected via a network connection.

Further, although administrative access device 130 is depicted as only communicating with content management server 100, in certain embodiments, administrative access device 130 can communicate with remote file server 140. For example, administrative access device 130 can communicate with remote file server 140 using cryptographic protocols, as described above. In such embodiments, administrative access device 130 can be utilized to, for example, add, remove, and/or edit content files stored on remote file server 140. Additionally, administrative access device 130 can send instructions to remote file server 140. For example, administrative access device 130 can send an instruction to remote file server 140 to transmit content files to a specified security panel, such as security panel 110.

In some embodiments, administrative access device 130 can represent a plurality of administrative access devices that can be utilized by a plurality of administrative users.

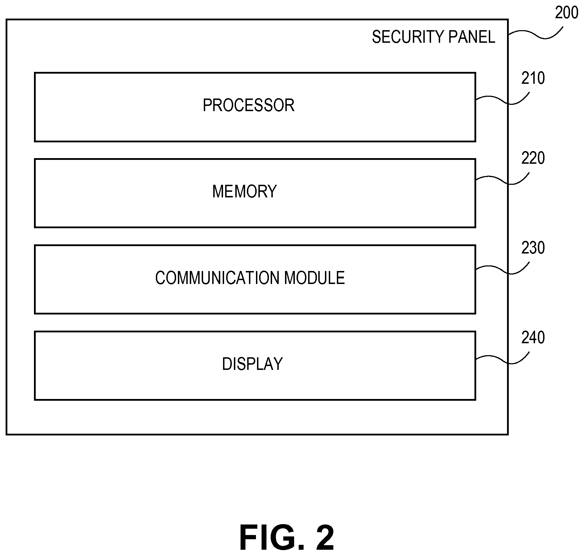

Referring to FIG. 2, depicted is security panel 200, and components thereof. It should be appreciated that FIG. 2 represents a generalized schematic illustration and that other components and/or entities can be added or existing components and/or entities can be removed or modified.

As shown in FIG. 2, security panel 200 can comprise processor 210 communicating with memory 220, such as electronic random access memory, or other forms of transitory or non-transitory computer readable storage mediums. Processor 210 can further communicate with communication module 230, such as a wired or wireless data connection, which in turn communicates with a wide area network, such as various public or private networks. More particularly, the wide area network can connect security panel 200 to one or more content management servers and remote file servers, such as content management server 100 and remote file server 140, as discussed with respect to FIG. 1, and/or other components. Communication module 230 can include an FTP module for sending and receiving FTP communications.

Processor 210 can execute control logic and perform data processing to perform the functions and techniques as discussed herein. For example, processor 210 can transmit requests for content information, receive content information files, and parse content information files.

Security panel 200 can further comprise display 240. Display 240 can represent any type of electronic visual display that includes, but is not limited to, liquid crystal display (LCD), plasma, and organic light-emitting diode (OLED). In embodiments, display 240 can include touchscreen functionality capable of detecting user input from the presence and location of a touch by the user within the display area. In other embodiments, security panel 200 can comprise a keypad for receiving user input.

As used herein, "security panel" can refer to any type of apparatus or system capable of managing or controlling one or more elements of a security system. Additionally, while FIG. 2 illustrates security panel 200 as a standalone system using a combination of hardware and software, the components of security panel 200 can also be implemented as a software application or program capable of being executed by a conventional computer platform. Likewise, the components of security panel 200 can also be implemented as a software module or program module capable of being incorporated in other software applications and programs. In either case, the components of security panel 200 can be implemented in any type of conventional proprietary or open-source computer language.

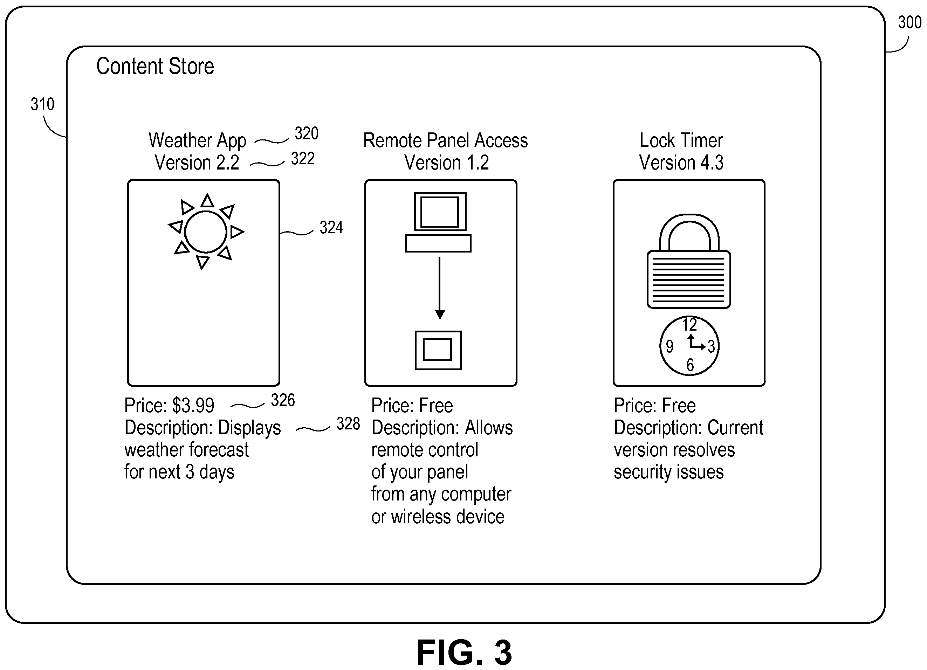

Referring to FIG. 3, depicted is an exemplary display detailing embodiments as described herein. It should be appreciated that FIG. 3 represents an illustrative example of a content store application that can be utilized on a security panel, and the exemplary applications and information displayed are for illustration purposes only and are not intended to be limiting.

As depicted in FIG. 3, security panel 300 can comprise touchscreen display 310. After a user has selected to run the content store application, security panel 300 can populate the content store with content information obtained from a content management server.

For example, the content store application can display a weather application with the name "Weather App" (320) and the current version number of the application "2.2" (322). Additionally, the content store application can display an icon associated with the weather application (324) that was retrieved from a remote file server, as described above. The content store can additionally display the price of the weather application as "$3.99" (326) and a description of the application (328).

If a user elects to select one of the displayed applications for purchase, the user can touch touchscreen 310 at the position of the icon of the selected application. Security panel 300 can then request the application from a remote file server and, upon receipt, install the application.

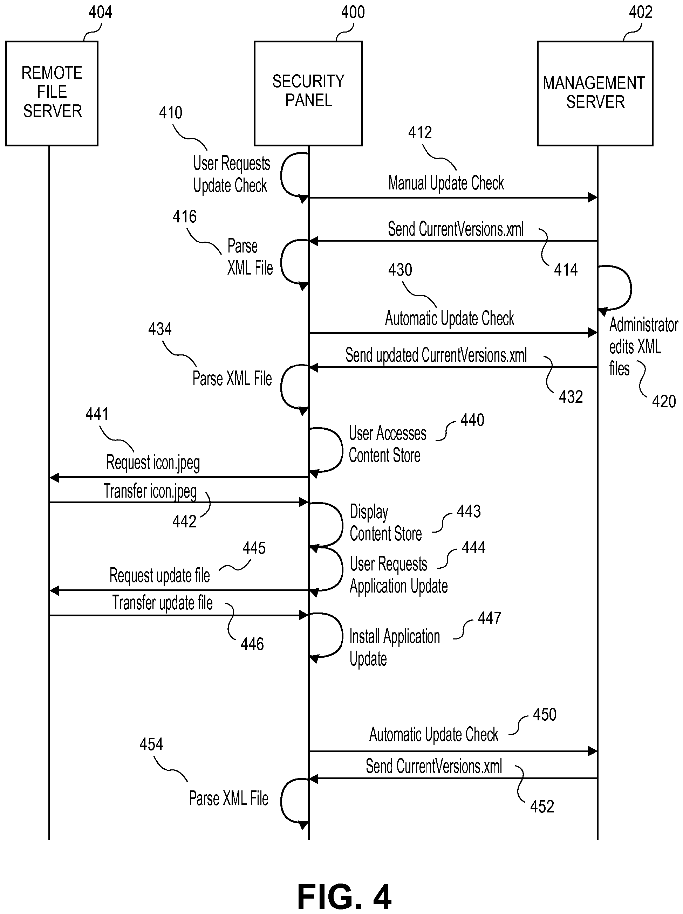

Referring to FIG. 4, depicted is a flowchart detailing embodiments as described herein. More particularly, the flowchart details communications and interactions among security panel 400, management server 402, and remote file server 404. It should be appreciated that the flowchart of FIG. 4 is merely exemplary and can comprise more or fewer functionalities.

Processing can begin when a user accesses security panel 400 and selects an option to check for application updates (410). Security panel 400 can send a request to management server 402 for current content information using, for example, FTP (412). Management server 402 can receive the request. In embodiments, management server 402 can determine the type of security panel based on the request and determine one or more content information files to send to security panel 400 based the type. In further embodiments, the request from security panel 400 can include requests for one or more specific content information files.

Based on the request, management server 402 can send content information file CurrentVersions.xml to security panel 400 (414). Security panel 400 can receive CurrentVersions.xml and can parse the XML file (416) to determine content information, including available applications, application version numbers, application prices, etc. Additionally, security panel 400 can determine that there are no newer versions of the applications currently implemented on security panel 400 and can inform the user that no new updates are available.

Further, an administrator can edit one or more content information files, including CurrentVersions.xml, on management server 402 (420). For example, the administrator can update the version information of a remote security panel access application, update the location information of the application, and update the location of a display icon for the application. The new location for the application and the icon can be the IP address of remote file server 404.

Additionally, security panel 400 can perform a scheduled automatic update check (430) and send a request to management server 402 for content information files. In response to the request, management server 402 can send an updated copy of CurrentVersions.xml to security panel 400 (432). Security panel 400 can parse CurrentVersions.xml (434), compare the current version information of remote security panel access application with the version information of a currently installed remote security panel access application, and determine that a new version is currently available.

Security panel 400 can display "New App Update Available" on the display of security panel 400 until a user accesses security panel 400. The user accessing security panel 400 can select to access a content store application on security panel 400 (440). In order to populate the content store, security panel 400 can compare icon information from CurrentVersions.xml with the icons that are already stored on security panel 400. Security panel 400 can determine that it does not have a stored icon for the new version of the remote security panel access application and request, using the location listed in CurrentVersions.xml, icon.jpeg from remote file server 404 (441). Remote file server 404 can then transfer icon.jpeg back to security panel 400 (442). Security panel 400 can then populate and display the content store with the appropriate icons for the available applications (443).

The user can select the icon for the new version of the remote security panel access application (444), and the security panel can request the update file for the application from remote file server 404 based on the location information in CurrentVersions.xml (445). In response to the request, remote file server 404 can transfer the update file back to security panel 400 (446). Security panel 400 can then install the update file (447).

Further, security panel 400 can perform another automatic update check (450) and request content information from management server 402. In response to the request, management server 402 can send CurrentVersions.xml (452). Security panel 400 can parse the XML file (454) and determine that no new updates are available because the XML file has not changed since the last update check.

It has been shown how the present embodiments have been attained.

## Claims

1. A security panel (400) comprising:
an electronic display;
a processing system comprising one or more processors; and
a memory system comprising one or more computer-readable media, wherein the computer-readable media contain instructions that, when executed by the processing system, cause the processing system to perform operations comprising:
providing an option to check for application updates;
sending a request to a management server (402) for current content information, wherein the type of security panel (400) is determinable by the management server (402) based on the request,
receiving, based on the request, one or more content information files, in particular, a CurrentVersions.xml file,
parsing the CurrentVersions.xml file to determine content information; determining that there are no newer versions of the applications currently implemented on the security panel and informing a user accordingly, and
additionally performing a scheduled automatic update check
comprising:
sending a request to the management server (402) for content information files,
receiving, from the management server (402), an updated copy of CurrentVersions.xml,
parsing the CurrentVersions.xml file, comparing the current version information of a remote security panel (400) access application with the version information of a currently installed remote security panel access application, and determining that a new version is available; and
populating and displaying a content store based on the content information, wherein the security panel (400) compares icon information from the CurrentVersions.xml file with icons that are already stored on the security panel (400), and if it determines that it does not have a stored icon for the new version of the remote security panel access application and request, it uses the location listed in the CurrentVersions.xml file, icon.jpeg, from a remote file server (404), whereupon the security panel (400) populates and displays the content store with the appropriate icons for the available applications.

2. The security apparatus of claim 1, wherein the user request is received via a touchscreen user interface.

3. A system for managing content information comprising:
a management server (402) configured to communicate with a security panel (400);
a processing system comprising one or more processors; and
a memory system comprising one or more computer-readable media, wherein the computer-readable media contain instructions that, when executed by the processing system, cause the processing system to perform operations comprising:
sending, by the security panel (400), to the management server (402) a request for current content information using a server-side File Transfer Protocol,
receiving, by the management server (402), the request
determining, by the management server (402), the type of security panel (400) based on the request and determining one or more content information files to send to the security panel (400) based on the type, wherein based on the request, the management server (402) sends a content information file CurrentVersions.xml to the security panel (400), and the security panel (400) parses the CurrentVersions.xml file to determine content information, and
determining, by the security panel (400) that there are no newer versions of the applications currently implemented on the security panel (400) and
informing a user of the security panel (400) accordingly, and
additionally performing, by the security panel (400) a scheduled automatic update check comprising:
sending a request to the management server (402) for content information files,
receiving, from the management server (402), an updated copy of CurrentVersions.xml,
parsing the CurrentVersions.xml file, comparing the current version information of a remote security panel access application with the version information of a currently installed remote security panel access application, and determining that a new version is available;
and
populating and displaying a content store based on the content information, wherein the security panel (400) compares icon information from the CurrentVersions.xml file with icons that are already stored on the security panel (400), and if it determines that it does not have a stored icon for the new version of the remote security panel access application and request, it uses the location listed in the CurrentVersions.xml file, icon.jpeg, from a remote file server (404), whereupon the security panel (400) populates and displays the content store with the appropriate icons for the available applications.

4. The system of claim 3, wherein the one or more content information files comprise one or more of content name information, content version information, content file location information, content category information, icon location information, content description, and content price.

5. The system of claim 3, the operations further comprise receiving a user request to edit the one or more content information files.

6. A method for accessing content information comprising:
sending, by a security panel (400), a request to a management server (402) for current content information,
determining, by the management server (402), the type of security panel (400) based on the request;
receiving, based on the request, by the security panel (400), one or more content information files, in particular, a CurrentVersions.xml file,
parsing, by the security panel (400), the CurrentVersions.xml file to determine content information;
determining, by the security panel (400) that there are no newer versions of the applications currently implemented on the security panel and informing a user accordingly, and
additionally performing a scheduled automatic update check
comprising:
sending, by the security panel (400), a request to the management server (402) for content information files,
receiving, by the security panel (400) from the management server (402), an updated copy of CurrentVersions.xml,
parsing, by the security panel (400), the CurrentVersions.xml file, comparing, by the security panel (400), the current version information of a remote security panel access application with the version information of a currently installed remote security panel access
application, and determining that a new version is available; and
populating and displaying, by the security panel (400), a content store based on the content information, wherein the security panel compares icon information from the CurrentVersions.xml file with icons that are already stored on the security panel, and if it determines that it does not have a stored icon for the new version of the remote security panel access application and request, it uses the location listed in the CurrentVersions.xml file, icon.jpeg, from a remote file server (404), whereupon the security panel populates and displays the content store with the appropriate icons for the available applications.

## Patentansprüche

1. Sicherheitspanel (400), aufweisend:
eine elektronische Anzeige;
ein Verarbeitungssystem, das einen oder mehrere Prozessoren umfasst; und
ein Speichersystem, das ein oder mehrere computerlesbare Medien umfasst, wobei die computerlesbaren Medien Anweisungen enthalten, die bei Ausführung durch das Verarbeitungssystem das Verarbeitungssystem dazu veranlassen, Operationen durchzuführen, die Folgendes umfassen:
Bereitstellen einer Option zum Prüfen auf Anwendungsaktualisierungen;
Senden einer Anfrage an einen Managementserver (402) für aktuelle Inhaltsinformationen, wobei die Art des Sicherheitspanels (400) durch den Managementserver (402) basierend auf der Anfrage bestimmbar ist,
Empfangen, basierend auf der Anfrage, einer oder mehrerer Inhaltsinformationsdateien, insbesondere einer CurrentVersions.xml-Datei,
Parsen der CurrentVersions.xml-Datei, um Inhaltsinformation festzustellen;
Feststellen, dass keine neueren Versionen der Anwendungen aktuell auf dem Sicherheitspanel implementiert sind, und dementsprechendes Informieren eines Benutzers, und
Zusätzliches Durchführen einer geplanten automatischen Aktualisierungsprüfung, aufweisend:
Senden einer Anfrage an den Managementserver (402) für Inhaltsinformationsdateien,
Empfangen einer aktualisierten Kopie der CurrentVersions.xml von dem Managementserver (402),
Parsen der CurrentVersions.xml-Datei, Vergleichen der aktuellen Versionsinformation einer Remote-Sicherheitspanel(400)-Zugriffsanwendung mit der Versionsinformation einer aktuell installierten Remote-Sicherheitspanel-Zugriffsanwendung und Feststellen, dass eine neue Version verfügbar ist;
und
Befüllen und Anzeigen eines Inhaltsspeichers basierend auf der Inhaltsinformation, wobei das Sicherheitspanel (400) Symbolinformationen aus der CurrentVersions.xml-Datei mit Symbolen vergleicht, die bereits auf dem Sicherheitspanel (400) gespeichert sind, und falls festgestellt wird, dass kein Symbol für die neue Version der Remote-Sicherheitspanel-Zugriffsanwendung und die Anfrage gespeichert ist, die in der CurrentVersions.xml-Datei aufgeführte Position, icon.jpeg, von einem Remote-Dateiserver (404) verwendet wird, woraufhin das Sicherheitspanel (400) in den Inhaltsspeicher die entsprechenden Symbole für die verfügbaren Anwendungen einpflegt und diese(n) anzeigt.

2. Sicherheitsvorrichtung nach Anspruch 1, wobei die Benutzeranfrage über eine Touchscreen-Benutzerschnittstelle empfangen wird.

3. System zum Managen von Inhaltsinformationen, aufweisend:
einen Managementserver (402), der dazu konfiguriert ist, mit einem Sicherheitspanel (400) zu kommunizieren;
ein Verarbeitungssystem, das einen oder mehrere Prozessoren umfasst; und
ein Speichersystem, das ein oder mehrere computerlesbare Medien umfasst, wobei die computerlesbaren Medien Anweisungen enthalten, die bei Ausführung durch das Verarbeitungssystem das Verarbeitungssystem dazu veranlassen, Operationen durchzuführen, die Folgendes umfassen:
Senden, durch das Sicherheitspanel (400), einer Anfrage für aktuelle Inhaltsinformationen unter Verwendung eines serverseitigen Dateiübertragungsprotokolls an den Managementserver (402),
Empfangen der Anfrage durch den Managementserver (402),
Bestimmen, durch den Managementserver (402), der Art des Sicherheitspanels (400) basierend auf der Anfrage und Bestimmen einer oder mehrerer Inhaltsinformationsdateien zum Senden an das Sicherheitspanel (400) basierend auf der Art, wobei der Managementserver (402) basierend auf der Anfrage eine Inhaltsinformationsdatei CurrentVersions.xml an das Sicherheitspanel (400) sendet und das Sicherheitspanel (400) die CurrentVersions.xml-Datei parst, um Inhaltsinformationen festzustellen, und
Feststellen durch das Sicherheitspanel (400), dass keine neueren Versionen der Anwendungen aktuell auf dem Sicherheitspanel (400) implementiert sind, und dementsprechendes Informieren eines Benutzers des Sicherheitspanels (400), und
Zusätzliches Durchführen, durch das Sicherheitspanel (400), einer geplanten automatischen Aktualisierungsprüfung, aufweisend:
Senden einer Anfrage an den Managementserver (402) für Inhaltsinformationsdateien,
Empfangen einer aktualisierten Kopie der CurrentVersions.xml von dem Managementserver (402),
Parsen der CurrentVersions.xml-Datei, Vergleichen der aktuellen Versionsinformation einer Remote-Sicherheitspanel-Zugriffsanwendung mit der Versionsinformation einer aktuell installierten Remote-Sicherheitspanel-Zugriffsanwendung und Feststellen, dass eine neue Version verfügbar ist;
und
Befüllen und Anzeigen eines Inhaltsspeichers basierend auf den Inhaltsinformationen, wobei das Sicherheitspanel (400) Symbolinformationen aus der CurrentVersions.xml-Datei mit Symbolen vergleicht, die bereits auf dem Sicherheitspanel (400) gespeichert sind, und falls festgestellt wird, dass kein Symbol für die neue Version der Remote-Sicherheitspanel-Zugriffsanwendung und die Anfrage gespeichert ist, die in der CurrentVersions.xml-Datei aufgeführte Position, icon.jpeg, von einem Remote-Dateiserver (404) verwendet wird, woraufhin das Sicherheitspanel (400) in den Inhaltsspeicher die entsprechenden Symbole für die verfügbaren Anwendungen einpflegt und diese(n) anzeigt.

4. System nach Anspruch 3, wobei die eine oder die mehreren Inhaltsinformationsdateien eines oder mehrere von Inhaltsnamensinformationen, Inhaltsversionsinformationen, Inhaltsdateipositionsinformationen, Inhaltskategorieinformationen, Symbolpositionsinformationen, Inhaltsbeschreibung und Inhaltspreis umfassen.

5. System nach Anspruch 3, wobei die Operationen ferner das Empfangen einer Benutzeranfrage zum Editieren der einen oder der mehreren Inhaltsinformationsdateien umfassen.

6. Verfahren zum Zugreifen auf Inhaltsinformationen, aufweisend:
Senden, durch ein Sicherheitspanel (400), einer Anfrage für aktuelle Inhaltsinformationen an einen Managementserver (402),
Bestimmen, durch den Managementserver (402), der Art des Sicherheitspanels (400) basierend auf der Anfrage;
Empfangen, basierend auf der Anfrage, durch das Sicherheitspanel (400), einer oder mehrerer Inhaltsinformationsdateien, insbesondere einer CurrentVersions.xml-Datei,
Parsen, durch das Sicherheitspanel (400), der CurrentVersions.xml-Datei, um Inhaltsinformationen zu festzustellen;
Feststellen, durch das Sicherheitspanel (400), dass keine neueren Versionen der Anwendungen aktuell auf dem Sicherheitspanel implementiert sind, und dementsprechendes Informieren eines Benutzers, und
zusätzliches Durchführen einer geplanten automatischen Aktualisierungsprüfung, aufweisend:
Senden, durch das Sicherheitspanel (400), einer Anfrage an den Managementserver (402) für Inhaltsinformationsdateien,
Empfangen, durch das Sicherheitspanel (400), einer aktualisierten Kopie der CurrentVersions.xml von dem Managementserver (402),
Parsen, durch das Sicherheitspanel (400), der CurrentVersions.xml-Datei,
Vergleichen, durch das Sicherheitspanel (400), der aktuellen Versionsinformationen einer Remote-Sicherheitspanel-Zugriffsanwendung mit den Versionsinformationen einer aktuell installierten Remote-Sicherheitspanel-Zugriffsanwendung und Feststellen, dass eine neue Version verfügbar ist; und
Befüllen und Anzeigen, durch das Sicherheitspanel (400), eines Inhaltsspeichers basierend auf den Inhaltsinformationen, wobei das Sicherheitspanel Symbolinformationen aus der CurrentVersions.xml-Datei mit Symbolen vergleicht, die bereits auf dem Sicherheitspanel gespeichert sind, und falls festgestellt wird, dass kein Symbol für die neue Version der Remote-Sicherheitspanel-Zugriffsanwendung und die Anfrage gespeichert ist, die in der CurrentVersions.xml-Datei aufgeführte Position, icon.jpeg, von einem Remote-Dateiserver (404) verwendet wird, woraufhin das Sicherheitspanel in den Inhaltsspeicher die entsprechenden Symbole für die verfügbaren Anwendungen einpflegt und diese(n) anzeigt.

## Revendications

1. Panneau de sécurité (400) comprenant :
un affichage électronique ;
un système de traitement comprenant un ou plusieurs processeurs ; et
un système de mémoire comprenant un ou plusieurs supports lisibles par ordinateur, dans lequel les supports lisibles par ordinateur contiennent des instructions qui, lorsqu'elles sont exécutées par le système de traitement, amènent le système de traitement à effectuer des opérations comprenant :
la fourniture d'une option pour vérifier les mises à jour d'application ;
l'envoi d'une demande à un serveur de gestion (402) relative à des informations de contenu actuel, dans lequel le type de panneau de sécurité (400) peut être déterminé par le serveur de gestion (402) sur la base de la demande,
la réception, sur la base de la demande, d'un ou de plusieurs fichiers d'informations de contenu, en particulier un fichier VersionsActuelles.xml,
l'analyse du fichier VersionsActuelles.xml pour déterminer des informations de contenu ;
le fait de déterminer qu'il n'y a pas de versions plus récentes des applications actuellement mises en œuvre sur le panneau de sécurité et d'informer un utilisateur en conséquence, et
la réalisation en outre d'une vérification de mise à jour automatique planifiée comprenant :
l'envoi d'une demande au serveur de gestion (402) relative à des fichiers d'informations de contenu,
la réception, depuis le serveur de gestion (402), d'une copie mise à jour de VersionsActuelles.xml,
l'analyse du fichier VersionsActuelles.xml, la comparaison des informations de version actuelle d'une application d'accès au panneau de sécurité distant (400) avec les informations de version d'une application d'accès au panneau de sécurité distant actuellement installée, et le fait de déterminer qu'une nouvelle version est disponible ; et
le fait de remplir et d'afficher un magasin de contenu sur la base des informations de contenu, dans lequel le panneau de sécurité (400) compare des informations d'icône du fichier VersionsActuelles.xml avec des icônes qui sont déjà stockées sur le panneau de sécurité (400), et s'il détermine qu'il n'y a pas d'icône stockée pour la nouvelle version de l'application d'accès au panneau de sécurité distant et pour la demande, il utilise l'emplacement répertorié dans le fichier VersionsActuelles.xml, icône.jpeg, à partir d'un serveur de fichiers distant (404), après quoi le panneau de sécurité (400) remplit et affiche le magasin de contenu avec les icônes appropriées pour les applications disponibles.

2. Appareil de sécurité selon la revendication 1, dans lequel la demande d'utilisateur est reçue par l'intermédiaire d'une interface utilisateur à écran tactile.

3. Système de gestion d'informations de contenu comprenant :
un serveur de gestion (402) configuré pour communiquer avec un panneau de sécurité (400) ;
un système de traitement comprenant un ou plusieurs processeurs ; et
un système de mémoire comprenant un ou plusieurs supports lisibles par ordinateur, dans lequel les supports lisibles par ordinateur contiennent des instructions qui, lorsqu'elles sont exécutées par le système de traitement, amènent le système de traitement à effectuer des opérations comprenant :
l'envoi, par le panneau de sécurité (400), au serveur de gestion (402) d'une demande d'informations de contenu actuel à l'aide d'un protocole de transfert de fichiers côté serveur,
la réception, depuis le serveur de gestion (402), de la demande
la détermination, par le serveur de gestion (402), du type de panneau de sécurité (400) sur la base de la demande et la détermination d'un ou de plusieurs fichiers d'informations de contenu à envoyer au panneau de sécurité (400) sur la base du type, dans lequel sur la base de la demande, le serveur de gestion (402) envoie un fichier d'informations de contenu VersionsActuelles.xml au panneau de sécurité (400), et le panneau de sécurité (400) analyse le fichier VersionsActuelles.xml pour déterminer des informations de contenu, et
le fait de déterminer, par le panneau de sécurité (400) qu'il n'y a pas de versions plus récentes des applications actuellement mises en œuvre sur le panneau de sécurité (400) et d'informer un utilisateur du panneau de sécurité (400) en conséquence, et
la réalisation en outre, par le panneau de sécurité (400), d'une vérification de mise à jour automatique planifiée comprenant :
l'envoi d'une demande au serveur de gestion (402) relative à des fichiers d'informations de contenu,
la réception, depuis leu serveur de gestion (402), d'une copie mise à jour du fichier VersionsActuelles.xml,
l'analyse du fichier VersionsActuelles.xml, la comparaison des informations de version actuelle d'une application d'accès au panneau de sécurité distant avec les informations de version d'une application d'accès au panneau de sécurité distant actuellement installée, et le fait de déterminer qu'une nouvelle version est disponible ; et
le fait de remplir et d'afficher un magasin de contenu sur la base des informations de contenu, dans lequel le panneau de sécurité (400) compare les informations d'icône du fichier VersionsActuelles.xml avec des icônes qui sont déjà stockées sur le panneau de sécurité (400), et s'il détermine qu'il n'y a pas d'icône stockée pour la nouvelle version de l'application d'accès au panneau de sécurité distant et pour la demande, il utilise l'emplacement répertorié dans le fichier VersionsActuelles.xml, icône.jpeg, à partir d'un serveur de fichiers distant (404), après quoi le panneau de sécurité (400) remplit et affiche le magasin de contenu avec les icônes appropriées pour les applications disponibles.

4. Système selon la revendication 3, dans lequel les un ou plusieurs fichiers d'informations de contenu comprennent un ou plusieurs éléments parmi des informations de nom de contenu, des informations de version de contenu, des informations d'emplacement de fichier de contenu, des informations de catégorie de contenu, des informations d'emplacement d'icône, une description de contenu et un prix de contenu.

5. Système selon la revendication 3, les opérations comprennent en outre la réception d'une demande d'utilisateur pour modifier les un ou plusieurs fichiers d'informations de contenu.

6. Procédé d'accès à des informations de contenu comprenant :
l'envoi, par un panneau de sécurité (400), d'une demande à un serveur de gestion (402) relative à des informations de contenu actuel,
la détermination, par le serveur de gestion (402), du type de panneau de sécurité (400) sur la base de la demande ;
la réception, sur la base de la demande, par le panneau de sécurité (400), d'un ou de plusieurs fichiers d'informations de contenu, en particulier, un fichier VersionsActuelles.xml,
l'analyse, par le panneau de sécurité (400), du fichier VersionsActuelles.xml pour déterminer des informations de contenu ;
le fait de déterminer, par le panneau de sécurité (400) qu'il n'y a pas de versions plus récentes des applications actuellement mises en œuvre sur le panneau de sécurité et d'informer un utilisateur en conséquence, et
la réalisation en outre d'une vérification de mise à jour automatique planifiée comprenant :
l'envoi, par le panneau de sécurité (400), d'une demande au serveur de gestion (402) relative à des fichiers d'informations de contenu,
la réception, par le panneau de sécurité (400) depuis le serveur de gestion (402), d'une copie mise à jour du fichier VersionsActuelles.xml,
l'analyse, par le panneau de sécurité (400), du fichier VersionsActuelles.xml, la comparaison, par le panneau de sécurité (400), des informations de version actuelle d'une application d'accès au panneau de sécurité distant avec les informations de version d'une application d'accès au panneau de sécurité distant actuellement installée, et le fait de déterminer qu'une nouvelle version est disponible ; et
le fait de remplir et d'afficher, par le panneau de sécurité (400), un magasin de contenu sur la base des informations de contenu, dans lequel le panneau de sécurité compare des informations d'icône du fichier VersionsActuelles.xml avec des icônes qui sont déjà stockées sur le panneau de sécurité, et s'il détermine qu'il n'y a pas d'icône stockée pour la nouvelle version de l'application d'accès au panneau de sécurité distant et pour la demande, il utilise l'emplacement répertorié dans le fichier VersionsActuelles.xml, icône.jpeg, à partir d'un serveur de fichiers distant (404), après quoi le panneau de sécurité remplit et affiche le magasin de contenu avec les icônes appropriées pour les applications disponibles.
